# EUROPÄISCHE PATENTSCHRIFT

(11) **EP 1 311 058 B1**
(45) Veröffentlichungstag und Bekanntmachung des Hinweises auf die Patenterteilung: **05.08.2015**
(21) Anmeldenummer: 01130152.0
(22) Anmeldetag: 19.12.2001
(51) Int. Cl.: H02M 7/487, H02M 7/483, H02M 1/42

(54) **Frequenzumrichter**
Frequency power converter
Convertisseur de frequence

(30) Priorität: 04.09.2001 DE 10143279
(43) Veröffentlichungstag der Anmeldung: 14.05.2003
(73) Patentinhaber: SEMIKRON Elektronik GmbH & Co. KG, 90431 Nürnberg (DE)
(72) Erfinder: Schreiber, Dejan, 90513 Zirndorf (DE)

(56) Entgegenhaltungen:
- EP-A- 0 695 024
- DE-A- 19 832 226
- DE-A1- 4 430 394
- US-A- 5 654 591
- US-A- 5 790 396
- US-A- 6 166 513
- US-B1- 6 229 722
- PETER BARBOSA ET AL.: "A front-end distributed power system for high-power applications." IEEE, 2000, Seiten 2546-2551, XP10522613

## Beschreibung

Die Erfindung betrifft einen Frequenzumrichtersystem für einen Energiefluß von einem Dreiphasennetz zu einem Verbraucher, für mittlere und hohe Ausgangsspannungen, mit variablen Ausgangsgrößen der Frequenz, des Stromes und der Spannung.

Die Anwendung von Dreiphasen-Mittelspannungsmotoren, d.h. von Motoren für 3 x 2,2 kV, 3 x 3,3 kV, 3 x 4,16 kV, 3 x 6,3 kV usw. bis 3 x 13,8 kV ist bekanntermaßen mittels hochsperrender Halbleiter, IGBTs (insulated gate bipolar transistor) oder mittels IGCTs (integrated gate communicated transistor) oder durch Kaskadierung, d.h. Reihenschaltung von für niedrigere Spannungen vorgesehene Komponenten möglich. Dabei sind Netzrückwirkungen sowie Motorspannungen und -ströme zu beachten. Netzrückwirkungen haben Einfluß auf die Netzspannung und müssen folglich möglichst vermieden werden. Von Wichtigkeit ist die Qualität der Netzspannung. Für die Netzspannung sind der Gesamtklirrfaktor und die Einzelklirrfaktoren von Interesse. Der Gesamtklirrfaktor ist der Effektivwert des

Verhältnisses aller Oberschwingungen zum Gesamteffektivwert. Der Einzelklirrfaktor ist der Effektivwert der Oberschwingung n-ter Ordnung bezogen auf den Gesamteffektivwert. Die maximal zulässigen Werte dieser Qualitäts-Kenngrößen sind in den einschlägigen Vorschriften definiert. Das heißt, die Lastströme der Mittelspannungsnetze müssen mindestens annähernd sinusförmig sein.

Bezüglich der Motorspannungen gilt, daß der Differentialquotient dv/dt nicht zu hoch sein darf, weil Hoch- und Mittelspannungsmotoren auf hohe Quotienten dv/dt sehr empfindlich sind, d.h. sehr schnelle Spannungsänderungen können zu Zerstörungen der Isolation von Hoch- und Mittelspannungsmotoren führen. Um große Koeffizienten dv/dt zu vermeiden, werden zwischen den Motoren und den zugehörigen Wechselrichtern beispielsweise Filter angewandt, wenn hochsperrende Bauteile zum Einsatz gelangen.

Es ist bekannt, für Pumpen, Lüfter o.dgl. mit variablen Drehzahlen Drehstrom-Asynchronmotoren als Mittelspannungsantriebe zu verwenden. Solche Antriebe werden elektrisch nicht gebremst, so daß keine kinetische Energie in das Versorgungsnetz zurückgespeist wird. Hierbei handelt es sich um sog. Zweiquadranten-Antriebe.

Aus der DE 198 32 225 A1 ist ein Vierquadrantenumrichter für mittlere und höhere Spannungen bekannt, der für ein- oder mehrphasige Verbraucher zur Erzeugung von amplituden- und frequenzvariablen Ausgangsgrößen vorgesehen ist. Er ist aus Einphasendirektumrichterzellen mit einer dreiphasigen Einspeisung aus einem Transformator und aus Hochfrequenzfiltern und Leistungsschaltern aufgebaut. Die Einphasendirektumrichterzellen sind in Reihe geschaltet und über einen Sternpunkt der zugehörigen Transformator-Sekundärwicklung gespeist. Die Hochfrequenzfilter in Form von Kondensatoren sind in Dreieck- oder Sternschaltung mit den zugehörigen Transformator-Sekundärwicklungen verbunden. Die Leistungsschalter sind bidirektionale Leistungshalbleiterbauelemente oder von deren Ersatzschaltungen gebildet. Bei dreiphasiger Ausführung sind die Leistungsausgänge des Umrichters in Stern- oder Dreieckschaltung ausgeführt.

Die DE 198 32 226 A1 beschreibt einen Vierquadrantenumrichter für mittlere und höhere Spannungen für ein- und mehrphasige Verbraucher zur Erzeugung von amplituden- und frequenzvariablen Ausgangsgrößen, der aus einer dreiphasigen Quelle eines Trenntransformators gespeist wird und der aus einer Anzahl Einphasenumrichterzellen besteht. Die Einphasenumrichterzellen sind in ihren Ausgängen zur Erzeugung hoher einphasiger Spannungen in Reihe geschaltet und können durch Parallelschalten von drei Reihen und durch Verbinden über Stern- bzw. Dreieckschaltung der entsprechenden Ausgänge zur Herstellung von Drehstrom ausgeführt sein.

Die beiden oben zitierten Druckschriften beschreiben also Hochspannungsantriebe mit Asynchrommotoren.

Die DE 196 35 606 A1 offenbart eine Vorrichtung zur Erzeugung einer höheren Wechselspannung aus mehreren niedrigen Gleichspannungen. Diese bekannte Vorrichtung weist wenigstens zwei Gleichspannungsquellen, eine Reihenschaltung und die Gleichspannungsquellen an die Reihenschaltung ankoppelnde, Leistungsschalter aufweisende, Teilspannungen variabler Breite erzeugende Spannungswandler auf. Die Leistungsschalter sind derartig angeordnet und ansteuerbar, daß die Teilspannungen unabhängig voneinander an die Reihenschaltung ankoppelbar sind und die Reihenschaltung unabhängig von der Anzahl der angekoppelten Teilspannungen geschlossen sein kann. Die Spannungswandler bestehen aus Teilwechselspannungen erzeugenden DC/ AC-Wandlern. Diese Vorrichtung eignet sich insbesondere für die Anwendung in Photovoltaikanlagen, in denen die DC/AC-Wandler als moduloptimierende String-Wechselrichter einsetzbar sind.

Die US 5,625,545 sowie die US 6,166,513 beschreiben einen Zweiquadranten-AC-AC-Antrieb und ein Verfahren zur Steuerung von Wechselstrommotoren, wobei ein Mehrphasenleistungstransformator eine Vielzahl Sekundärwicklungen für eine Vielzahl Leistungszellen aufweist. Jede Leistungszelle besitzt einen Einphasenausgang und ist durch eine Modulationssteuerung steuerbar. Die Leistungszellen sind in Reihe geschaltet, um in jeder Zelle eine maximale Ausgangsspannung zu ermöglichen. Bei diesem bekannten Antrieb ist der Mehrphasenleistungstransformator, der für die volle Antriebsleitung dimensioniert ist, mit einer entsprechenden Anzahl Sekundärwicklungen versehen, die kompliziert verschaltet sind. So sind einige Sekundärwicklungen in Dreieck, andere Sekundärwicklungen in Stern, und wieder andere Sekundärwicklungen zickzack usw. geschaltet.

Im Dokument EP 0 695 024 sorgt ein Hochsetzsteller zwischen einem Einphasengleichrichter und einem Frequenzumrichter für eine aktive, jedoch Konventionelle, Korrektur des Leistungsfaktors bei einem Kompressorantrieb.

Aktive Oberschwingungsfilter zur Korrektur des Leistungsfaktors mit zwei Drosseln, zwei Leistungstransistoren und zwei Dioden werden in DE 4430394 und US 5 654 591 beschrieben.

Für Anwendungen im Mittelspannungsbereich mit Asynchronmotoren sind beispielsweise Systeme der Fa. ABB unter der Bezeichnung ACS bekannt. Beispielsweise beschreibt die Firmenzeitschrift ABB Technik 6/1997, Seiten 31 bis 39, ACS 600-Antriebe mit direkter Drehmomentregelung. Diese und verwandte Systeme weisen einen Eingangstransformator auf, der für die volle Motorleistung ausgelegt ist. Außerdem weisen diese Systeme 12-Puls-Diodengleichrichter, Zwischenkreiskondensatoren, IGBT- oder IGCT-Wechselrichter sowie Ausgangsfilter auf. Der Wechselrichter, der von einem spannungseingeprägten Wechselrichter gebildet ist, ist beispielsweise mit mehreren hochsperrenden IGCTs in Reihe geschaltet. IGCTs für den Mittelspannungsbereich sind beispielsweise in der Firmenzeitschrift ABB Technik 3/1997, Seiten 12 bis 17, unter dem Titel "IGCTs-Megawatt-Hablleiterschalter für den Mittelspannungsbereich" beschrieben. Hochsperrende Halbleiter, IGBTs und IGCTs weisen um einen Faktor 3 bis 10 höhere Schaltverluste auf als 1,2 kV und 1,7 kV IGBTs. Obwohl ihre Schaltgeschwindigkeit nicht sehr groß ist, ist der Spannungsanstieg dv/dt sehr groß, weil die Zwischenkreisspannung hoch ist, d.h. mehrere kV beträgt. Für eine Zwischenkreisspannung von 100 kV und eine Schaltzeit von 1µs ergibt sich dv/dt = 100 kV/µs. Derartig schnelle Spannungsanstiege können die Wicklungen von Motoren und/oder Transformatoren nicht aushalten. Zur Vermeidung solch großer Spannungsanstiege sind zusätzliche passive LC-Filter, die für die volle Leistung ausgelegt sind, am Ausgang erforderlich. Alle bekannten Lösungen, wie sie oben beschrieben worden sind, weisen einen Eingangstransformator auf. Einige dieser bekannten Lösungen wie die von ABB benötigen Ausgangsfilter. Die US 5,625,545 sowie die US 6,166,513 schlagen einen Eingangstransformator für die volle Leistung vor, der sehr aufwendige Sekundärwicklungen aufweist, wie bereits erwähnt worden ist.

Der Erfindung liegt die Aufgabe zugrunde, einen Frequenzumrichter für einen Energiefluß von einem Dreiphasennetz zu einem Verbraucher, für mittlere und hohe Ausgangsspannungen, mit variablen Ausgangsgrößen der Frequenz, des Stromes und der Spannung, zu schaffen, wobei die Netzströme mit symmetrischer Belastung aller Netzphasen mindestens annähernd sinusförmig sind, annähernd sinusförmige Lastströme mit den variablen Ausgangsgrößen erzeugt werden, die Spannungsänderung pro Zeiteinheit dv/dt am Ausgang relativ klein ist, um Isolationsprobleme zu vermeiden, und handelsübliche Leistungshalbleiterbauelement mit einem hohen Wirkungsgrad Verwendung finden können.

Diese Aufgabe wird erfindungsgemäß durch die Merkmale des Anspruches 1 gelöst. Bevorzugte Aus- bzw. Weiterbildungen des erfindungsgemäßen Frequenzumrichters sind in den Unteransprüchen 2 und 3 gekennzeichnet.

Der erfindungsgemäße Frequenzumrichter weist die Vorteile auf, daß die Netzströme mindestens annähernd sinusförmig mit symmetrischer Belastung aller Netzphasen sind, daß mindestens annähernd sinusförmige Lastströme mit variablen Ausgangsgrößen der Frequenz, des Stromes und der Spannung erzeugt werden, daß die Spannungsänderung pro Zeiteinheit dv/dt am Ausgang des Frequenzumrichters vergleichsweise klein ist, so daß Isolationsprobleme vermieden werden, und daß handelsübliche Leistungshalbleiterbauelemente wie beispielsweise 1,2 kV IGBTs mit einem hohen Wirkungsgrad Anwendung finden.

Weitere Einzelheiten, Merkmale und Vorteile ergeben sich aus der nachfolgenden Beschreibung von in der Zeichnung dargestellten Schaltungen des erfindungsgemäßen Frequenzumrichters, bei dem es sich um einen Zweiquadranten-Umrichter für mittlere und hohe Ausgangsspannungen handelt.

Es zeigen:
- Figur 1a: eine Frequenzumrichtereinheit eines Frequenzumrichtersystems mit einer dreiphasigen Frequenzurririchtereinheitenversorgung,
- Figur 1b: eine alternative Schaltung einer Freqenzumrichtereinheit eines Frequenzumrichtersystems mit einer dreiphasigen Frequenzumrichtereinheitenversorgung,

- Figur 2a: eine Frequenzumrichtereinheit des Frequenzumrichtersystems für eine einphasige Frequenzumrichtereinheitenversorgung,
- Figur 2b: eine alternative Schaltung einer Frequenzumrichtereinheit für eine einphasige Frequenzumrichtereinheitenversorgung, und
- Figur 3: eine Frequenzumrichterschaltung mit einer Vielzahl von Frequenzumrichtereinheiten gemäß Figur 1a.
- Figur 4: eine Frequenzumrichterschaltung mit einer Vielzahl von Frequenzumrichtereinheiten gemäß Figur 2b.

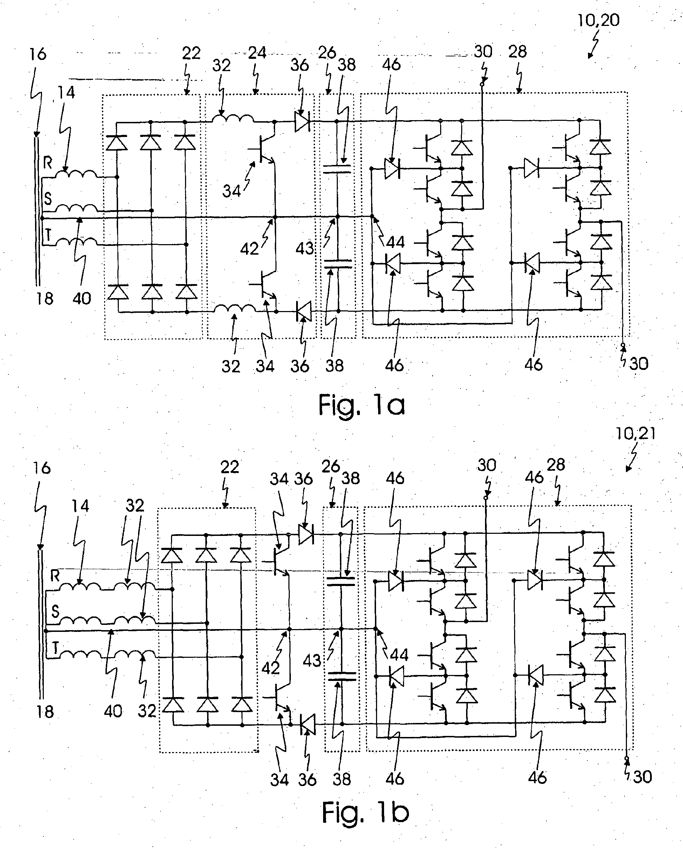

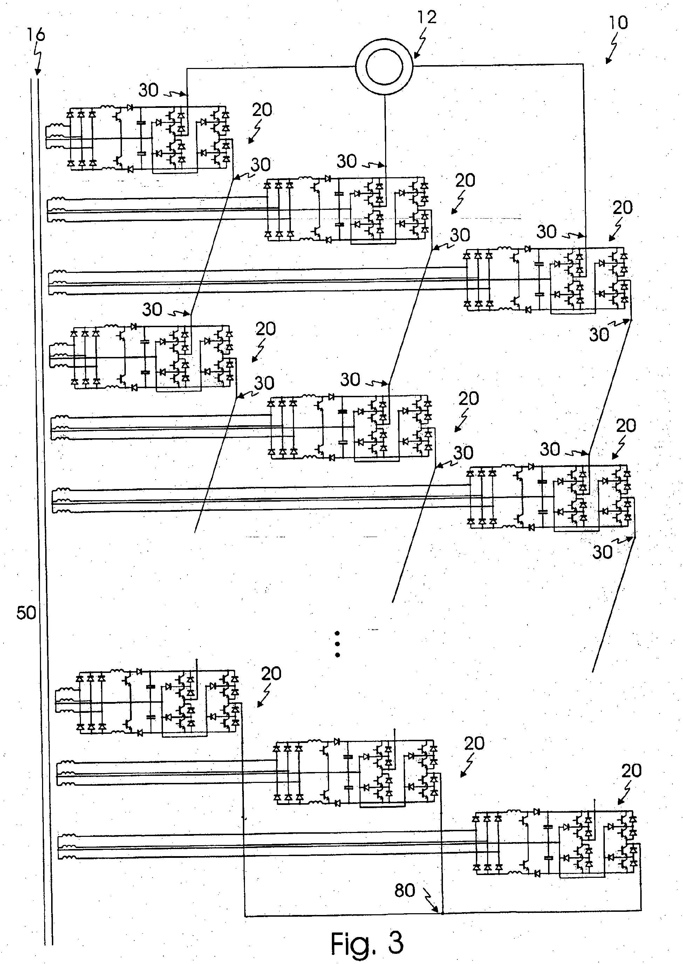

Figur 1a zeigt eine Frequenzumrichtereinheit 20 eines Frequenzumrichtersystems 10 für einen Energiefluß von einem Dreiphasennetz zu einem Verbraucher 12 (sh. Figur 3), für mittlere und hohe Ausgangsspannungen mit variablen Ausgangsgrößen der Frequenz, des Stromes und der Spannung. Das Frequenzumrichtersystem 10 wird aus Sekundärwicklungen 14 eines Transformators 16 gespeist, dessen Kern durch zwei Linien 18 schematisch angedeutet ist. Pro Phase des Verbrauchers 12 ist mindestens eine Frequenzumrichtereinheit 20 vorgesehen. Die Frequenzumrichtereinheiten 20 sind identisch ausgebildet. Jede Frequenzumrichtereinheit 20 weist eine aus den drei Phasen des Transformators 16 gespeiste Dioden-Eingangsgleichrichterschaltung 22, ein aktives Oberschwingungsfilter 24, das auch als Power Factor Corrector (PFC) bezeichnet wird, und auch als Hochsetzsteller verwendet wird, eine Zwischenkreiskapazität 26 und einen ausgangsseitigen Dreipunktwechselrichter 28 mit Ausgängen 30 auf. Das aktive Oberschwingungsfilter 24 weist zwei Eingangsdrosseln 32, zwei in Reihe geschaltete steuerbare Schalter 34 und zwei Dioden 36 auf, um eine sinusförmige Netzstromaufnahme und eine steuerbare Zwischenkreisspannung für die Zwischenkreiskapazität 26 zu erzeugen. Die Zwischenkreiskapazität 26 weist zwei in Reihe geschaltete Kondensatorengruppen 38 auf.

Die Sekundärwicklungen 14 des Transformators 16 sind in Stern geschaltet. Ein Nulleiter 40 der Sternschaltung der Sekundärwicklungen 14 des Transformators 16 ist mit dem Mittelpunkt 42 der in Reihe geschalteten steuerbaren Schalter 34, dem Mittelpunkt 43 der in Reihe geschalteten Kondensatorengruppen 38 und über einen Anschlußpunkt 44 mit den NPC-Dioden (NPC = neutral point clamped diode / Diode der Mittelanzapfung) 46 des Dreipunktwechselrichters 28 verbunden.

Bei der in Figur 1a gezeichneten Schaltung einer Frequenzumrichtereinheit 20 des Frequenzumrichtersystems 10 sind die beiden Eingangsdrosseln 32 an die Gleichspannungs-Ausgangsseite der Dioden-Eingangsgleichrichterschaltung 22 angeschlossen. Eine andere Möglichkeit der Ausgestaltung (sh. Figur 1b) einer Zelle besteht darin, daß das aktive Oberschwingungsfilter drei Eingangsdrosseln aufweist, die mit den Sekundärwicklungen 14 des Transformators 16 in Reihe geschaltet sind, d.h. die an der Wechselspannungs-Eingangsseite der Dioden-Eingangsgleichrichterschaltung 22 vorgesehen sind, wie in Frequenzumrichtereinheit 21 gezeigt.

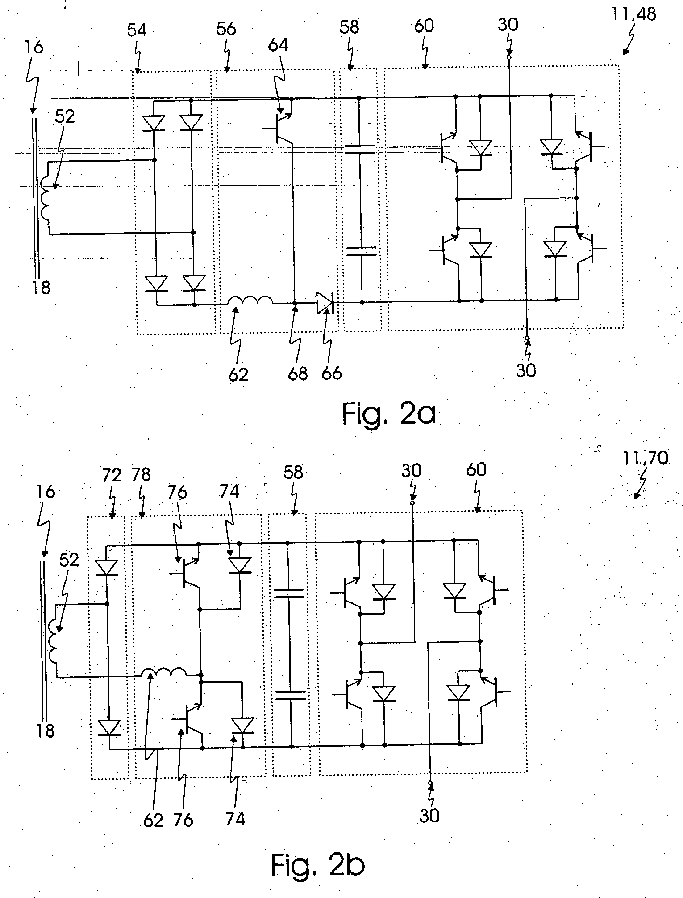

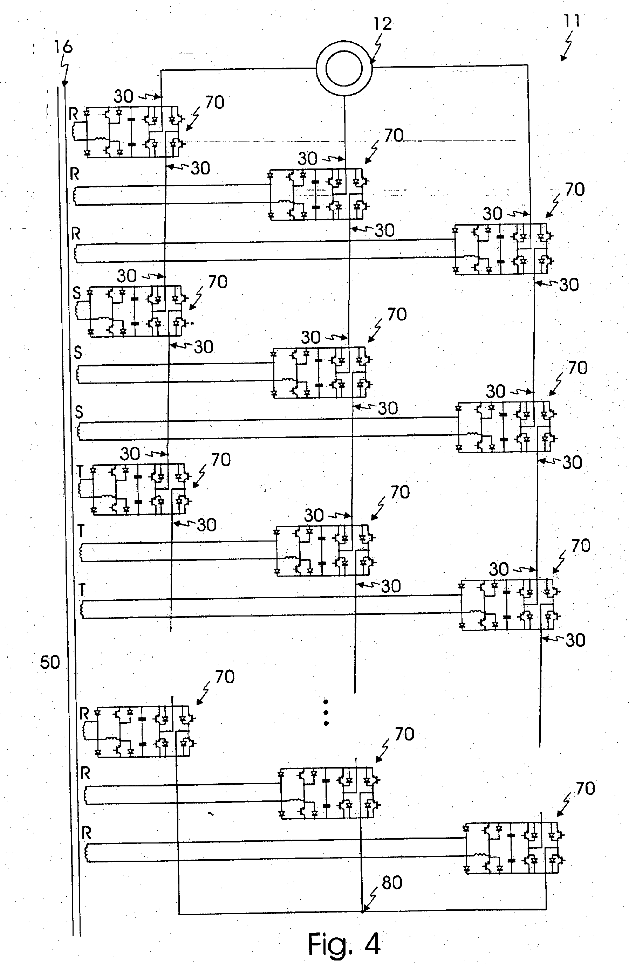

Figur 2a zeigt eine Frequenzumrichtereinheit 48 für ein Frequenzumrichtersystem 11 für einen Energiefluß von einem Dreiphasennetz 50 zu einem Verbraucher 12 (sh. Figur 4) für mittlere und hohe Ausgangsspannungen, mit variablen Ausgangsgrößen der Frequenz, des Stromes und der Spannung, mit einer einphasigen Versorgung der jeweiligen Frequenzumrichtereinheit 48. Mit der Bezugsziffer 16 ist auch in Figur 2a der Transformator mit seinem Kern 18 bezeichnet. Eine Sekundärwicklung 52 des Transformators 16 ist mit einer Dioden-Eingangsgleichrichterschaltung 54 verbunden. Die Dioden-Eingangsgleichrichterschaltung ist mit einem aktiven Oberschwingungsfilter 56 zusammengeschaltet. Das aktive Oberschwingungsfilter 56 ist mit einer Zwischenkreiskapazität 58 verbunden. Die Frequenzumrichtereinheit 48 weist desweiteren einen ausgangsseitigen Wechselrichter 60 auf, der an die Zwischenkreiskapazität 58 angeschlossen ist. Der ausgangsseitige Wechselrichter 60 weist Ausgänge 30 auf.

Das aktive Oberschwingungsfilter 56 weist eine Eingangsdrossel 62, einen steuerbaren Schalter 64 und eine Diode 66 zur Erzeugung einer steuerbaren Zwischenkreisspannung für die Zwischenkreiskapazität 58 auf.

Gemäß Figur 2a ist die Eingangsdrossel 62 an die Gleichspannungs-Ausgangsseite der Dioden-Eingangsgleichrichterschaltung 54 angeschlossen. Die Eingangsdrossel 62 ist mit der Diode 66 in Reihe geschaltet. Der steuerbare Schalter 64 ist an den Mittelpunkt 68 der Reihenschaltung der Eingangsdrossel 62 mit der Diode 66 angeschlossen. Demgegenüber verdeutlicht die Figur 2b eine Frequenzumrichtereinheit 70, die sich von der Frequenzumrichtereinheit 48 gemäß Figur 2a insbesondere dadurch unterscheidet, daß die Eingangsdrossel 62 an die Wechselstrom-Eingangsseite der Dioden-Eingangsgleichrichterschaltung 72 angeschlossen ist. Das aktive Oberschwingungsfilter 78 weist außer der Eingangsdrossel 62 zwei Dioden 74 und dazu jeweils antiparallel geschaltete steuerbare Schalter 76 auf. Im übrigen ist die Frequenzumrichtereinheit 70 gemäß Figur 2b der Frequenzumrichtereinheit 48 gemäß Figur 2a entsprechend geschaltet, d.h. an das aktive Oberschwingungsfilter 78 ist eine Zwischenkapazität 58 angeschlossen, die mit einem ausgangsseitigen Wechselrichter 60 verbunden ist. Mit der Bezugsziffern 30 sind auch in Figur 2b die Ausgänge des ausgangsseitigen Wechselrichters 60 bezeichnet.

Figur 3 zeigt ein dreiphasiges Netz 50 und einen aus dem Netz 50 mit Energie versorgten Verbraucher 12 und den zwischen diesen vorgesehenen Frequenzumrichtersystems 10. Das Frequenzumrichtersystem 10 weist Frequenzumrichtereinheiten 20 gemäß Figur 1a auf. Die identischen Frequenzumrichtereinheiten 20 sind jeweils mit drei Sekundärwicklungen des Transfomators 16 verbunden. Die Frequenzumrichtereinheiten 20 sind mit ihren Ausgängen 30 in Kolonnen zusammengeschaltet. Die Kolonnen weisen einen Stempunkt 80 auf.

Figur 4 zeigt ein dreiphasiges Netz 50 und einen aus dem Netz 50 mit Energie versorgten Verbraucher 12 und den zwischen diesen vorgesehenen Frequenzumrichtersystems 11. Das Frequenzumrichtersystem 11 weist Frequenzumrichtereinheiten 70 gemäß Figur 2b auf. Die identischen Frequenzumrichtereinheiten 70 sind jeweils mit einer zugehörigen Sekundärwicklung des Transformators 16 verbunden. Mit R, S und T sind die drei Wechselstromphasen bezeichnet. Die Frequenzumrichtereinheiten 70 sind mit ihren Ausgängen 30 in Kolonnen zusammengeschaltet. Die Kolonnen weisen einen Sternpunkt 80 auf. Drei Frequenzumrichtereinheit 70 einer Phase des Verbrauchers 12 gespeist durch die drei Wechselstromphasen R, S, T erfüllen bei dem Frequenzumrichtersystem 11 die gleiche Aufgabe wie eine Frequenzumrichtereinheit 20 bei dem Frequenzumrichtersystem 10.

### Bezugsziffernliste:

- 10: Frequenzumrichtersystem
- 11: Frequenzumrichtersystem
- 12: Verbraucher
- 14: Sekundärwicklungen (von 16)
- 16: Transformator
- 18: Kern (von 16)
- 20: Frequenzumrichtereinheit (von 10)
- 21: Frequenzumrichtereinheit (von 10)
- 22: Dioden-Eingangsgleichrichter (von 20, 21)
- 24: aktives Oberschwingungsfilter (von 20)
- 26: Zwischenkreiskapazität (von 20, 21)
- 28: Dreipunkt-Wechselrichter (von 20, 21)
- 30: Ausgänge (von 28, 60)
- 32: Eingangsdrosseln (von 24)
- 34: steuerbare Schalter (von 24)
- 36: Dioden (von 24)
- 38: Kondensatorgruppen (von 26)
- 40: Nulleiter (für 20, 21)
- 42: Mittelpunkt (zwischen 34 und 34)
- 43: Mittelpunkt (zwischen 38 und 38)
- 44: Verbiindugspunkt (von 40 mit 46)
- 46: NPC-Dioden (von 28)
- 48: Frequenzumrichtereinheit (von 11)
- 50: Dreiphasennetz
- 52: Sekundärwicklung (von 16)
- 54: Dioden-Eingangsgleichrichterschaltung (von 48)
- 56: aktives Oberschwingungsfilter (von 48)
- 58: Zwischenkreiskapazität (von 48)
- 60: ausgangsseitiger Wechselrichter (von 48)
- 62: Eingangsdrossel (von 56)
- 64: steuerbarer Schalter (von 56)
- 66: Diode (von 56)
- 68: Mittelpunkt (zwischen 62 und 66)
- 70: Frequenzumrichtereinheit (von 11)
- 72: Dioden-Eingangsgleichrichterschaltung (von 70)
- 74: Dioden (von 78)
- 76: steuerbare Schalter (von 78)
- 78: aktives Oberschwingungsfilter (von 70)
- 80: Sternpunkt (von 10, 11)

## Patentansprüche

1. Frequenzumrichtersystem (10) für einen Energiefluß von einem Dreiphasennetz (50) zu einem Verbraucher (12), für mittlere und hohe Ausgangsspannungen, mit variablen Ausgangsgrößen der Frequenz, des Stromes und der Spannung, gespeist aus Sekundärwicklungen (14) eines Transformators (16), mit mehreren Frequenzumrichtereinheiten (20, 21) pro Phase des Verbrauchers (12), wobei die/jede identische Frequenzumrichtereiriheit (20, 21) eine aus den drei Phasen des Transformators (16) gespeiste Dioden-Eingangsgleichrichterschaltung (22) in Dreiphasen Brückengleichrichtertopologie, ein aktives Oberschwingungsfilter (24), eine Zwischenkreiskapazität (26) und einen ausgangsseitigen Dreipunkt-Wechselrichter (28) mit NPC-Dioden (46) aufweist, wobei das aktive Oberschwingungsfilter (24) mindestens zwei Eingangsdrosseln (32), mindestens zwei in Reihe geschaltete steuerbare Schalter (34) und mindestens zwei Dioden (36) zur sinusförmigen Netzstromaufnahme und zur Erzeugung einer steuerbaren Zwischenkreisspannung für die Zwischenkreiskapazität (26), und die Zwischenkreiskapazität (26) zwei in Reihe geschaltete Kondensatorengruppen (38) aufweist, und ein Nulleiter (40) der Sternschaltung der Sekundärwicklungen (14) des Transformators (16) mit dem Mittelpunkt (42) der in Reihe geschalteten steuerbaren Schalter (34), dem Mittelpunkt (43) der in Reihe geschalteten Kondensatorengruppen (38) und den NPC-Dioden (46) des Dreipunktwechselrichters (28) verbunden ist.

2. Frequenzumrichtersystem nach Anspruch 1,
**dadurch gekennzeichnet,**
**daß** das aktive Oberschwingungsfilter (24) zwei Eingangsdrosseln (32) aufweist, die mit der Gleichspannungs-Ausgangsseite der Dioden-Eingangsgleichrichterschaltung (22) verbunden sind.

3. Frequenzumrichtersystem nach Anspruch 1,
**dadurch gekennzeichnet,**
**daß** das aktive Oberschwingungsfilter (24) drei Eingangsdrosseln aufweist, die mit den Sekundärwicklungen (14) des Transformators (16) und der Wechselspannungs-Eingangsseite der Dioden-Eingangsgleichrichterschaltung (22) in Reihe geschaltet sind.

## Claims

1. Frequency converter system (10) for a power flow from a three-phase grid (50) to a consumer (12), for medium and high output voltages, with variable output variables for the frequency, the current and the voltage, fed from secondary windings (14) of a transformer (16), having a plurality of frequency converter units (20, 21) per phase of the consumer (12), wherein the/each identical frequency converter unit (20, 21) has a diode input rectifier circuit (22) in three-phase bridge rectifier topology fed from the three phases of the transformer (16), an active harmonic filter (24), an intermediate circuit capacitance (26) and an output-side three-point inverter (28) with NPC diodes (46), wherein the active harmonic filter (24) has at least two input inductors (32), at least two series-connected controllable switches (34) and at least two diodes (36) for sinusoidal grid current consumption and for generating a controllable intermediate circuit voltage for the intermediate circuit capacitance (26), and the intermediate circuit capacitance (26) has two series-connected capacitor groups (38), and a zero conductor (40) of the star connection of the secondary winding (14) of the transformer (16) is connected to the centre point (42) of the series-connected controllable switches (34), to the centre point (43) of the series-connected capacitor groups (38) and to the NPC diodes (46) of the three-point inverter (28).

2. Frequency converter system according to Claim 1,
**characterized**
**in that** the active harmonic filter (24) has two input inductors (32) which are connected to the DC-voltage output side of the diode input rectifier circuit (22).

3. Frequency converter system according to Claim 1,
**characterized**
**in that** the active harmonic filter (24) has three input inductors which are connected in series with the secondary windings (14) of the transformer (16) and the AC-voltage input side of the diode input rectifier circuit (22).

## Revendications

1. Système convertisseur de fréquence (10) pour un flux d'énergie d'un réseau triphasé (50) vers un consommateur (12), pour des tensions de sortie moyennes et hautes, avec des grandeurs de sortie variables de la fréquence, du courant et de la tension, alimenté depuis les enroulements secondaires (14) d'un transformateur (16), comprenant plusieurs unités de conversion de fréquence (20, 21) par phase du consommateur (12), la/chaque unité de conversion de fréquence (20, 21) identique possédant un circuit redresseur d'entrée à diodes (22) en topologie de redresseur en pont triphasé alimenté par les trois phases du transformateur (16), un filtre à harmoniques actif (24), une capacité de circuit intermédiaire (26) et un onduleur tripolaire (28) côté sortie muni de diodes NPC (46), le filtre à harmoniques actif (24) possédant au moins deux bobines de choc d'entrée (32), au moins deux commutateurs commandables (34) branchés en série et au moins deux diodes (36) servant à l'absorption du courant sinusoïdal du réseau et à générer une tension de circuit intermédiaire commandable pour la capacité de circuit intermédiaire (26), et la capacité de circuit intermédiaire (26) possédant deux groupes de condensateurs (38) branchés en série, et un conducteur neutre (40) du circuit en étoile des enroulements secondaires (14) du transformateur (16) étant relié au point central (42) des commutateurs commandables (34) branchés en série, au point central (43) des groupes de condensateurs (38) branchés en série et aux diodes NPC (46) de l'onduleur tripolaire (28).

2. Système convertisseur de fréquence selon la revendication 1, **caractérisé en ce que** le filtre à harmoniques actif (24) possède deux bobines de choc d'entrée (32) qui sont reliées au côté sortie de tension continue du circuit redresseur d'entrée à diodes (22).

3. Système convertisseur de fréquence selon la revendication 1, **caractérisé en ce que** le filtre à harmoniques actif (24) possède trois bobines de choc d'entrée, lesquelles sont branchées en série avec les enroulements secondaires (14) du transformateur (16) et le côté entrée de tension alternative du circuit redresseur d'entrée à diodes (22).
